# EUROPEAN PATENT APPLICATION

(11) **EP 2 482 403 A1**
(43) Date of publication of application: **01.08.2012**
(21) Application number: 10818248.6
(22) Date of filing: 27.09.2010
(51) Int. Cl.: H02G 3/08

(54) **JUNCTION BOX FOR SOLAR CELL COMPONENT AND SOLAR CELL COMPONENT**

(30) Priority: 25.09.2009 CN 200910178805
(71) Applicant: Wuxi Suntech Power Co., Ltd., New District Wuxi Jiangsu 214-028 (CN)
(72) Inventor: TANG, Yingtang, Wuxi Jiangsu 214028 (CN); LIU, Jiaoyan, Wuxi Jiangsu 214028 (CN); WANG, Dong, Wuxi Jiangsu 214028 (CN); NIE, Junbo, Wuxi Jiangsu 214112 (CN)
(74) Representative: Solf, Alexander
(86) International application number: PCT/CN2010/001500
(87) International publication number: WO 2011/035554

(57) **Abstract**

A fission structure type junction box for a solar cell module (6) and the solar cell module (6) including the fission structure type junction box. The fission structure type junction box is provided with a main junction box (1) and a slave junction box (2). A conductor is set in the slave junction box (2) and connected with a bus bar of the solar cell module (6). A bypass diode (12) and a conducting piece (13) are positioned in the main junction box (1). The conducting piece (13) in the main junction box (1) is electrically connected with the conductor in the slave junction box (2). Therefore a fault of a circuit in the junction box does not influence the cell module and the fault circuit is easy to maintain.

## Description

### TECHNICAL FIELD

The invention pertains to a junction box for a solar cell module, in particular, to a fission structure type junction box for a solar cell module and the solar cell module including the same.

### BACKGROUND OF THE INTENTION

A junction box for a solar cell module of prior art is directly mounted on a back surface of the solar cell module. The junction box includes a cover, and a main body in which a bypass diode, a conducting piece and a cable with a connector are provided. The conducting piece is connected to a bus bar of the solar cell module for leading out the current from each of the cell strings. The bypass diode is connected to the conducting piece for protecting each of the cell strings. The cable with a connector is connected to the conducting piece for outputting the current in the solar cell module.

In the process of making the invention, the inventor found that at least the following problems exist in the prior art: because the junction box is secured on the back surface of the solar cell module directly by using silica gel, the quality of the solar cell module, may be endangered directly and even the whole module may be damaged, when a fault occurs in the bypass diode or other units within the junction box; the junction box as a whole needs to be detached from the back surface of the module during the maintenance, which is inconvenient for maintenance and may cause damage to the back surface of the module.

### SUMMARY OF THE INTENTION

An object of the invention is to provide a junction box for a solar cell module, which aims to solve the problems that the quality of the solar cell module is influenced when problems occur in the circuit portion within the junction box, and it is inconvenient to carry out maintenance for the circuit portion being subjected to fault.

A further object of the invention is to provide the solar cell module including the junction box, which aims to solve the problems of the quality default and difficult maintenance of the prior solar cell module due to the junction box.

For solving above technical problems, the present invention provides a junction box for a solar cell module comprising a conducting piece and a bypass diode provided on the conducting piece. The junction box includes a main junction box and a slave junction box. A conductor is set in the slave junction box and connected with the bus bar of the solar cell module. The bypass diode and the conducting piece are positioned in the main junction box. The conducting piece in the main junction box is electrically connected with the conductor in the slave junction box.

Wherein, the slave junction box is mounted to the back surface of the solar cell module, and the main junction box may be mounted to a frame of the solar cell module or a module mounting support, or the main junction box is mounted to a reinforcing plate of the solar cell module.

Wherein, the reinforcing plate has a convex portion thereon, and the main junction box is mounted within the convex portion.

Wherein, the slave junction box is mounted to the back surface of the solar cell module, and the main junction box is in the form of an external-connected integrated module that is electrically connected with the slave junction box.

Wherein, the conducting piece in the main junction box is connected with the conductor in the slave junction box by plugging or wiring.

Wherein, the main junction box is provided with output end that is electrically connected with the conducting piece in the main junction box for outputting the current in the solar cell module.

Wherein, the bus bar is connected with the conductor by welding, riveting, elastically crimping or screw crimping.

Wherein, both the slave junction box and the main junction box are sealed in structure.

Wherein, the sealing of the slave junction box and the sealing of the main junction box are achieved by glue-filling, plastic-enclosing, or sealing of main body.

The present invention further provides a solar cell module including the junction box for a solar cell module as described above.

The present invention has the following advantageous effects that 1) the quality of the solar cell module can not be influenced when serious problems occur in the circuit portion within the junction box, thereby improving the quality of the solar cell module; and 2) it is easier to carry out maintenance for the circuit portion within the junction box being susceptible to fault.

### DESCRIPTION OF THE DRAWING

Fig. 1 is a schematic view of the overall structure of a fission structure type junction box for a solar cell module according to an embodiment of the present invention with a main junction box connected with a slave junction box in the manner of wiring;
Fig. 2 is an exploded schematic view of the structure of the junction box for a solar cell module in Fig. 1;
Fig. 3 is a schematic view of the overall structure of another fission structure type junction box for a solar cell module according to an embodiment of the present invention with a main junction box connected with a slave junction box in the manner of plugging;
Fig. 4 is a top schematic view showing a main junction box provided on a reinforcing plate of the solar cell module according to an embodiment of the present invention; and Fig. 5 is a bottom schematic view of the structure of the reinforcing plate in Fig. 4.

### DETAILED DESCRIPTION OF PREFERRED EMBODIMENTS

The invention will be described in detail below with reference to the accompanying drawings, so that the objects, technical aspects and advantages of the invention will be more apparent. Only partial frame of the solar cell module is shown in the drawings for clarity. It is to be understood that the frame of the module is not limited to the frame on the upper portion.

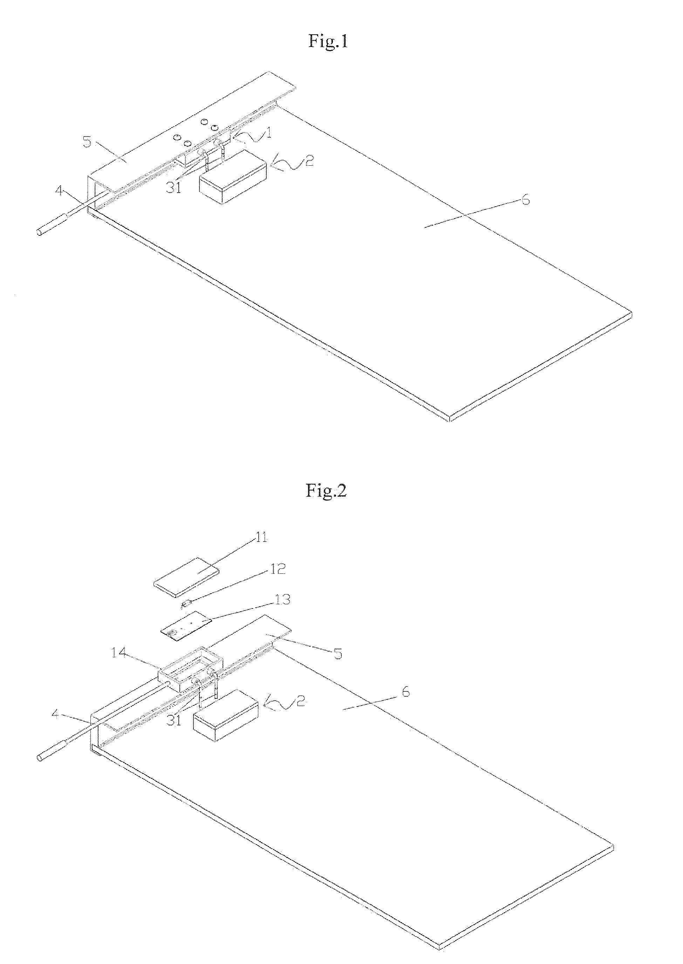

The junction box for the solar cell module of this embodiment is a fission structure type junction box as shown in Figs. 1-3. The fission structure type junction box includes a main junction box 1 and a slave junction box 2.

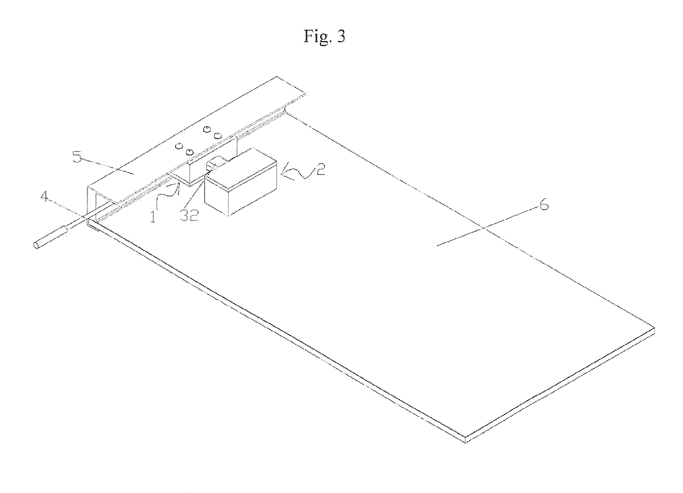

The exploded schematic view of the structure of the fission structure type junction box is shown in Fig. 2. The main junction box 1 is mounted to a frame 5 of the solar cell module 6. A conducting piece 13 and a bypass diode 12 provided on the conducting piece 13 are positioned in the main junction box 1. The slave junction box 2 is mounted to a back surface of the solar cell module 6. A conductor (not shown in the drawing) is set in the slave junction box 2 and connected with a bus bar of the solar cell module, wherein the connection between the bus bar and the conductor may be welding, riveting, elastically crimping or screw crimping. The conducting piece 13 in the main junction box 1 is electrically connected with the conductor in the slave junction box 2. The electrical connection between the conducting piece 13 in the main junction box 1 and the conductor in the slave junction box 2 is obtained by adopting the wiring manner using cables 31 as shown in Fig. 1 and the plugging manner using a connector 32 as shown in Fig. 3, for example. The connector 32 can be designed such that the conducting piece 13 within the main junction box I is electrically connected with the conductor within the slave junction box 2 through the connection of a socket and a plug, that is, a socket is provided in the main junction box I and a corresponding plug is provided in the slave junction box 2, or a socket is provided in the slave junction box 2 and a corresponding plug is provided in the main junction box. In addition, a sealing ring is provided between the plug and the socket in order to ensure the close plugging and prevent the corrosion from outside. The sealing ring can be provided within the slot in the plug (both the sealing ring and the slot being not illustrated).

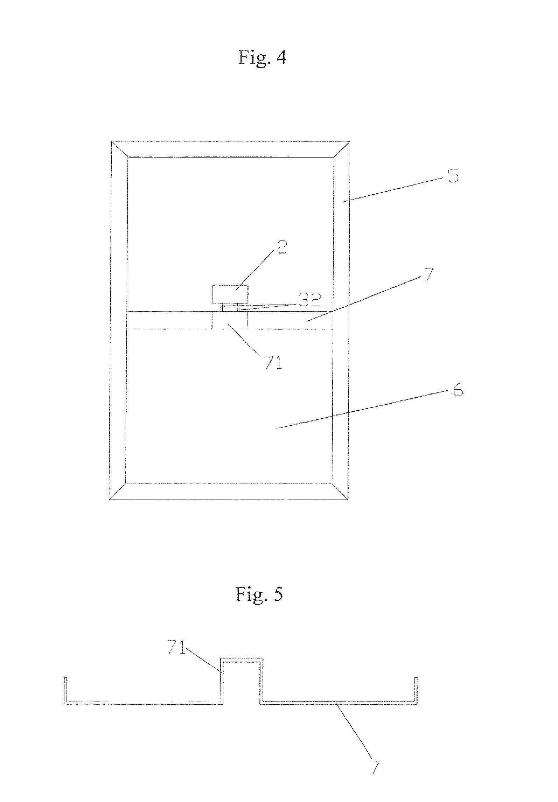

Of course, the main junction box 1 may also be mounted to other elements in the solar cell module. As shown in Fig. 4, for example, it is necessary to add a reinforcing plate 7 to the solar cell module in the case that a special demand is imposed on the strength of the solar cell module, and two ends of the reinforcing plate 7 are secured to the frame 5 of the solar cell module. In this case, the main junction box 1 may also mounted to the reinforcing plate 7. The reinforcing plate 7 can have a convex portion 71 thereon, and the main junction box 1 is mounted within the convex portion 71, as shown in Fig. 5.

It should be understood that the main junction box 1 of the present invention is preferably provided in the interval space within the frame 5 or the reinforcing plate 7 of the solar cell module in order to protect the junction box, however, the mounting locations are not limited thereto.

As shown in Figs. 1-3, the main junction box I may also be provided with an output end, namely a cable with a connector 4, that can be led out. The output end is electrically connected with the conducting piece 13 within the main junction box I for outputting the current in the solar cell module 6. As such, the current in the solar cell module 6 passes sequentially through the slave junction box 2 and the main junction box 1, and finally is lead out through the cable with a connector 4, which facilitates the connection with other power-consuming devices.

Both the main junction box 1 and the slave junction box 2 are sealed in structure, and the sealing of the slave junction box and the sealing of the main junction box can be achieved by glue-filling, plastic-enclosing or sealing of main body. As shown in Fig. 2, for example, the sealing of main body is adopted for the sealing of the main junction box 1 with a main body 14 and a cover 11 being sealed together.

The above embodiments have illustrated a case in which the main junction box and the slave junction box are secured on the solar cell module at various structural positions. Additionally, when being in the form of integrated module of smaller volume, the main junction box can be directly provided in such a manner that it is eternally connected with the slave junction box, and can be electrically connected with the slave junction box through plugging or wiring.

The embodiments of the present invention can effectively eliminate the damage of the solar cell module 6 caused by the heat generated by the bypass diode 12, because the invention adopts the fission structure type junction box, that is, the junction box includes the main junction box 1 and the slave junction box 2, while the quality of the solar cell module including the fission structure type junction box can be improved. Moreover, both the bypass diode 12 and the conducting piece 13 which are susceptible to fault are provided in the main junction box 1 by virtue of the fission structure type junction box, which is easy to be detached and is convenient for technical personnel to maintain.

The foregoing description is the preferred embodiments of the present invention merely. It should be noted that, for a person skilled in the art, many changes and modifications could be made on the basis of the embodiment disclosed above without departing from the principle of the invention, and these changes and modifications are intended to be embraced by the protecting scope of the invention.

## Claims

1. A junction box for a solar cell module, comprising a conducting piece and a bypass diode provided on the conducting piece, **characterized in that**: the junction box includes a main junction box and a slave junction box; a conductor is set in the slave junction box and connected with a bus bar of the solar cell module; the bypass diode and the conducting piece are positioned in the main junction box; and the conducting piece in the main junction box is electrically connected with the conductor in the slave junction box.

2. The junction box for a solar cell module according to claims 1, **characterized in that** the slave junction box is mounted to a back surface of the solar cell module and the main junction box is mounted to a frame or a module mounting support of the solar cell module.

3. The junction box for a solar cell module according to claims 1, **characterized in that** the slave junction box is mounted to a back surface of the solar cell module and the main junction box is in the for of externally-connected integrated module being electrically connected with the slave junction box.

4. The junction box for a solar cell module according to claim 1, **characterized in that** the slave junction box is mounted to a back surface of the solar cell module and the main junction box is mounted to a reinforcing plate of the solar cell module.

5. The junction box for a solar cell module according to claim 4, **characterized in that** the reinforcing plate has a convex portion thereon, and the main junction box is mounted within the convex portion.

6. The junction box for a solar cell module according to any one of claims 1-5, **characterized in that** the conducting piece in the main junction box is electrically connected with the conductor in the slave junction box by plugging or wiring.

7. The junction box for a solar cell module according to any one of claims 1-5, **characterized in that** the main junction box is provided with an output end that is electrically connected with the conducting piece in the main junction box for outputting the current in the solar cell module.

8. The junction box for a solar cell module according to any one of claims 1-5, **characterized in that** the bus bar is connected to the conductor by welding, riveting, elastic crimping or screw crimping.

9. The junction box for a solar cell module according to any one of claims 1-5, **characterized in that** both the slave junction box and the main junction box are sealed in structure.

10. The junction box for a solar cell module according to claim 9, **characterized in that** the sealing of the slave junction box and the sealing of the main junctions are achieved by glue-filling, plastic-enclosing or sealing or main body.

11. A solar cell module, **characterized in that** comprising the junction box for a solar cell module according to any one of claims 1-10.
